# EUROPÄISCHE PATENTSCHRIFT

(11) **EP 0 643 250 B1**
(45) Veröffentlichungstag und Bekanntmachung des Hinweises auf die Patenterteilung: **16.04.1997**
(21) Anmeldenummer: 94113759.8
(22) Anmeldetag: 02.09.1994
(51) Int. Cl.: F16L 39/00, E04F 17/02

(54) **Doppelwandiges Rohrleitungssystem**
A double-walled pipe assembly
Assemblage de tuyaux à paroi double

(30) Priorität: 14.09.1993 DE 4331194
(43) Veröffentlichungstag der Anmeldung: 15.03.1995
(73) Patentinhaber: BRAAS GMBH, 61440 Oberursel (DE)
(72) Erfinder: Wanner, Wendelin, D-65366 Geisenheim (DE)

(56) Entgegenhaltungen:
- DE-A- 3 105 406
- US-A- 4 029 343
- US-A- 4 029 344
- US-A- 4 341 392

## Beschreibung

Die Erfindung betrifft ein doppelwandiges Rohrleitungssystem, insbesondere für einen Luft-Abgas-Schornstein, mit einem Innenrohrsystem, das in einem Außenrohrsystem mittels Abstandshaltern konzentrisch angeordnet ist, wobei das Innenrohrsystem längsverschiebbar ineinander eingesteckte Innenrohrteile aufweist und das Außenrohrsystem einzelne Außenrohre aufweist mit einem schulterförmigen Abschnitt mit einer schräg oder quer zur Achse des Rohrleitungssystems verlaufenden Fläche.

Für den Luft-Abgas-Betrieb von modernen Wärmeerzeugern, insbesondere von Brennwert- oder Niedertemperaturgeräten, werden zunehmend konzentrisch angeordnete, doppelwandige Rohrleitungssysteme eingesetzt, um einerseits das bei der Verbrennung entstehende Abgas sicher abzuführen und andererseits die zur Verbrennung benötigte Zuluft durch eine platzsparende Rohrleitungsführung und bei einer der Energieeinsparung dienenden Zuluftvorwärmung zuzuführen.

Aus der EP 0 399 123 A1 ist ein Abstandhalter zur Bildung von doppelwandigen Rohren bekannt, der auf einem als Innenrohr dienenden, geraden Rohrabschnitt aufgeklemmt wird und mit auf seiner nach außen weisenden Oberfläche befindlichen Stegen einen konzentrischen Abstand zu einem als Außenrohr dienenden, geraden Rohrabschnitt herstellt. Mit der aus der EP 0 399 123 A1 bekannten Anordnung können nur gerade doppelwandige Rohrabschnitte hergestellt werden. Der Abstandhalter läßt starke Verschiebungen von einem Innenrohr gegenüber einem Außenrohr in axialer Richtung zu.

Aus der DE 39 26 202 A1 ist ein doppelwandiges Rohrsystem bekannt, gebildet aus konzentrisch zueinander angeordneten Rohren, die mit Klebemuffen oder Haftmuffen miteinander verbunden sind, bei denen zwischen Innenrohr und Außenrohr starre, durchlochte Zentrierringe haftend oder klebend eingesetzt sind.

Die aus der DE 39 26 202 A1 bekannte Anordnung stellt ein durch die verwendete Verbindungstechnik des Haftens oder Klebens starres doppelwandiges Rohrleitungssystem dar. Zwischen dem Innenrohr und dem Außenrohr können bei unterschiedlicher Wärmeausdehnung Spannungen entstehen, die innerhalb einzelner Rohrabschnitte zur Zerstörung führen können. Nachträgliche Änderungen an einer fertig installierten Rohrleitung dieser Art sind nur durch Zerschneiden der Rohrleitung möglich.

In der DE 42 01 703 A1 ist ein Bausystem zum Erstellen von doppelwandigen Schornsteinen sowie Abgas- und Abdampfleitungen beschrieben, bei dem das Innenrohrsystem aus Kunststoff und das Außenrohrsystem aus Edelstahl besteht. Bei diesem Bausystem ist das gesamte Innenrohrsystem gemeinsam mit dem Außenrohrsystem auf einem Sockelelement befestigt. Als Kunststoffspritzteile gefertigte Verbindungsmuffen für die Innenrohre weisen Längsrippen auf, die lediglich zentrierend wirken. Die gesamte Längenänderung des Innenrohrsystems infolge Temperaturwechsels muß an der Mündung des Schornsteins ausgeglichen werden.

Aus der US-A-4,029,343 ist eine Verbindung für ein doppelwandiges Rohrleitungssystem bekannt. Das Rohrleitungssystem weist ein Innenrohrsystem auf, das aus einzelnen Innenrohren und einem Verbindungsrohr aufgebaut ist. Die Innenrohre sind endseitig mit radial nach außen vorspringenden Flanschen versehen. Eines der Innenrohre ist endseitig mit dem Verbindungsrohr verbunden. Da der Außendurchmesser des Verbindungsrohres geringer ist als der Innendurchmesser eines Innenrohres, ist das Verbindungsrohr längsverschiebbar in ein anderes Innenrohr einsteckbar. Auf diese Weise ist eine thermische Längendehnung des Innenrohrsystems ausgleichbar sowie eine Längenanpassung bei der Montage möglich. Das Innenrohrsystem ist mittels radial wirkender Abstandshaltern konzentrisch in einem Außenrohrsystem angeordnet. Das Außenrohrsystem ist aus einzelnen Außenrohren zusammengefügt, wobei jedes Außenrohr zumindest einen schulterförmigen Abschnitt mit einer schräg oder quer zur Achse des Rohrleitungssystems verlaufenden Fläche aufweist.

Der Erfindung liegt die Aufgabe zugrunde, ein doppelwandiges, bei Temperaturwechsel mechanisch spannungsfrei bleibendes Rohrleitungssystem auch für große Bauhöhen mit einer möglichst geringen Anzahl von verschiedenartigen Bauteilen zu schaffen, dessen Montage und nachträgliche Änderungen von Hand, ohne Zuhilfenahme von Werkzeugen durchgeführt werden kann und die Anwendung von Fügetechniken wie Kleben oder Schweißen erübrigt.

Erfindungsgemäß wird die Aufgabe dadurch gelöst, daß das Innenrohrsystem einzelne in Rohrverbinder eingesteckte erste Innenrohre und zweite Innenrohre aufweist, daß die Abstandshalter als die Rohrverbinder auf den schulterförmigen Abschnitten in axialer Richtung abstützende Stützelemente ausgebildet sind, daß jeweils das von oben in einen Rohrverbinder eingesteckte zweite Innenrohr auf diesem Rohrverbinder abgestützt ist und daß die Länge eines von unten in einen Rohrverbinder eingesteckten ersten Innenrohrs um den Betrag der zu erwartenden größtmöglichen Längendehnung vermindert ist, so daß jedes Innenrohr jeweils einzeln abgestützt ist.

Bei diesem Rohrleitungssystem, das insbesondere für die senkrechte Rohrleitung in einem Luft-Abgas-Schornstein geeignet ist, ist jedes einzelne Innenrohr durch die Stützelemente in radialer Richtung zentriert und außerdem in axialer Richtung separat abgestützt.

Das Eigengewicht und durch temperaturbedingte Längenänderung entstehende Reibungskräfte werden von den Stützelementen jeweils gesondert abgefangen. Daher ist dieses Rohrsystem auch für große Bauhöhen besonders geeignet. Infolge temperaturbedingter Längendehnung der Innenrohre von einigen mm pro Meter auftretende mechanische Spannungen lassen sich vollständig vermeiden, weil die Länge eines Innenrohres um den Betrag der zu erwartenden größtmöglichen Längendehnung vermindert ist und die aneinandergefügten Innenrohre jeweils in axialer Richtung verschiebbar miteinander verbunden sind.

Die Montage des Rohrleitungssystems und die Herstellung der einzelnen Rohre ist besonders einfach, wenn die Stützelemente im Bereich einer Verbindung von zwei Außenrohren des Außenrohrsystems angeordnet sind.

Die Querschnittsfläche des Ringspalts zwischen Innen- und Außenrohren wird nur unwesentlich verringert, wenn die Stützelemente als über den Umfang verteilte Stege ausgebildet sind.

Für das Innenrohrsystem und das Außenrohrsystem können handelsübliche Rohre verwendet werden, wenn die Stützelemente miteinander verbunden sind und außen auf einem schulterförmigen Abschnitt eines Außenrohres aufliegen und wenn an einem Innenrohr schräg oder quer zur Achse verlaufende Flächen angeordnet sind, auf denen das Innenrohr auf den Stützelementen aufliegt. Beispielsweise können drei oder mehr Stützelemente an einem Ring angeordnet sein, der vor Einbringen eines Innenrohrs in ein Außenrohr eingelegt wird. Die Stützelemente können auch auf der Außenfläche einer ein Innenrohr umspannenden Schelle nach außen weisend vorgesehen sein.

Eine besonders stabile Ausbildung der Stützelemente ist möglich, wenn diese einstückig mit einem Rohrverbinder des Innenrohrsystems ausgeführt sind. Die Herstellung eines derartigen Innenrohrteils mit einer in der Mitte längsgeteilten Außenform ist möglich, wenn über den Umfang des Innenrohrteils vier Stützelemente in 90°-Teilung angeformt sind.

Die Verwendung von in Fertigungslängen lieferbaren glatten Innenrohren ist möglich, wenn zur Verbindung der Innenrohre ein Rohrverbinder vorgesehen ist, der im Bereich beider Endabschnitte muffenartig ausgebildet ist und an seiner Innenwandung einen Vorsprung aufweist. Der Rohrverbinder ist über die Stützelemente auf einem Außenrohr abgestützt. Das von oben in den Rohrverbinder eingeführte Innenrohr ist auf dem Vorsprung abgestützt.

Vorteilhafterweise sind die Stützelemente an einem Endabschnitt eines Rohrverbinders bzw. eines Innenrohrbogens angeordnet, in den ein anderes Innenrohr einsteckbar ist. Vorzugsweise ist dieser Endabschnitt muffenartig mit einem dem Außendurchmesser eines Innenrohrs entsprechenden Innendurchmesser ausgebildet. Das betreffende Innenrohr kann gerade, als Rohrbogen in verschiedenen Abwinklungen, als T-Stück, als Abzweigung, als Revisionsteil, als Ventil oder als Klappe ausgebildet sein.

Ein zwischen zwei Rohrverbindern eingesetztes Innenrohr ist entsprechend der zu erwartenden Längendehnung in kaltem Zustand kürzer als der axiale Abstand der in den beiden Rohrverbindern vorgesehenen Vorsprünge. Das von unten in den Rohrverbinder eingeführte Innenrohr reicht infolge Längendehnung nur bei höchster Temperaturbelastung bis an den Vorsprung heran und kann sich bei Verkürzung infolge Abkühlung in axialer Richtung entsprechend zurückziehen. Daher ist das Innenrohrsystem frei von Kräften in axialer Richtung infolge Wärmedehnung, denn jedes Innenrohr ist jeweils einzeln abgestützt. Dies hat außerdem den Vorteil, daß bei senkrechter Einbausituation nicht das gesamte Gewicht des Innenrohrsystems auf dem untersten Innenrohr lastet.

Eine besonders kurze Ausführung des Rohrverbinders ist möglich, wenn die beiden muffenartigen Endabschnitte nur durch einen schmalen Vorsprung an seiner Innenwandung etwa in Längsmitte getrennt sind.

Eine gasdichte Ausführung des Innenrohrsystems wird erreicht, wenn nahe dem freien Ende eines Endabschnittes eines Rohrverbinders bzw. eines Innenrohrbogens eine umlaufende Sicke angebracht ist, in die ein Dichtungsring eingelegt ist.

Die Stützelemente können besonders kurz ausgeführt sein, wenn sie im Bereich einer Sicke angeordnet sind. Vorteilhafterweise sind die Stützelemente im Muffenbereich eines Rohrverbinders an der Außenseite einer Sicke gleichmäßig über deren Umfang verteilt angeformt.

Die Stützelemente können im wesentlichen trapezförmig in ihrer Seitenansicht ausgeführt sein, wobei die Länge in axialer Richtung etwa der doppelten Breite der Sicke und die Dicke etwa der Wanddicke des Rohrverbinders entspricht.

Das Außenrohrsystem kann aus Außenrohren zusammengesetzt sein, die an einem Ende anschließend an einen schulterförmigen Abschnitt, an dem die Stützelemente anliegen, muffenartig erweitert sind. So ist es beispielsweise möglich, für das Außenrohrsystem handelsübliche Abflußrohre oder dergleichen mit Muffenverbindung zu verwenden. Diese können aus Kunststoff, Metall, Keramik, Glas oder dergleichen bestehen.

Bei Verwendung von Abflußrohren aus Kunststoff mit Muffenverbindung, bei denen der schulterförmige Abschnitt konisch ausgeführt ist, kann die Außenseite des Stützelements im Bereich der Anlagefläche abgeschrägt sein. Wenn die Außenseite des Stützelements stufenförmig mit zur Anlagefläche hin überstehender Nase ausgebildet ist, kann das Einsteckende eines Außenrohres sehr weit in die Muffenverbindung eingeschoben werden.

Das Einschieben des Einsteckendes wird erleichtert, wenn an der Oberkante eines Stützelements eine Anschlupffase vorgesehen ist. Das Einsteckende des Außenrohres liegt mit seiner Stirnseite dabei auf den Nasen der Stützelemente auf. Eine größere Auflagefläche für die Stirnseite eines Einsteckendes sowie für die Stützelemente am Außenrohr wird erzielt, wenn die Stützelemente mit einem am schulterförmigen Abschnitt des Außenrohrs anliegenden Ring verbunden sind.

Durch zentrisches Ineinanderstecken von mit Stützelementen versehenen Rohrverbindern in Muffen von Außenrohren entstehen doppelwandige Rohrteile, die verbunden mit geraden Innenrohrabschnitten und geraden Außenrohrabschnitten mit jeweils erforderlichen Längen ein doppelwandiges Rohrleitungssystem bilden.

Als Werkstoffe für mit erfindungsgemäßen Rohrverbindern hergestellte Rohrleitungssysteme sind Kunststoff, Metall, Glas und Keramik sowie deren Kombination geeignet. Bei Verwendung des erfindungsgemäßen Rohrleitungssystems für Brennwertgeräte in der Heizungstechnik können Außen- und Innenrohre aus Hart-Polyvinylchlorid (PVC-U) oder Polypropylen (PP) bestehen. Bei höherer Wärmebelastung der Innenrohre können diese und die Rohrverbinder beispielsweise aus Polytetrafluorethylen (PTFE), Polyetherimid (PEI) oder Polyvinylidenfluorid (PVDF) gefertigt sein.

Die Abdichtung der zusammengesteckten Verbindungsstellen des Innenrohrsystems sowie auch des Außenrohrsystems erfolgt durch an sich bekannte Dichtungsringe mit entsprechender Temperaturbeständigkeit.

Anstelle der Anordnung der Stützelemente am Innenrohr können diese auch nach innen weisend einstückig mit einem Außenrohr ausgeführt sein, wobei an dem auf den Stützelementen aufliegenden Innenrohrteil schräg oder quer zur Achse verlaufende Flächen angeordnet sind.

In der Zeichnung ist ein bevorzugtes Ausführungsbeispiel der Erfindung dargestellt, das im folgenden näher erläutert wird.

Es zeigt
- Fig. 1: eine Rohrverbindung eines erfindungsgemäßen doppelwandigen Rohrleitungssystems im Längsschnitt und
- Fig. 2: einen 87°-Rohrbogen des erfindungsgemäßen doppelwandigen Rohrleitungssystems mit daran anschließenden geraden Abschnitten im Längsschnitt.

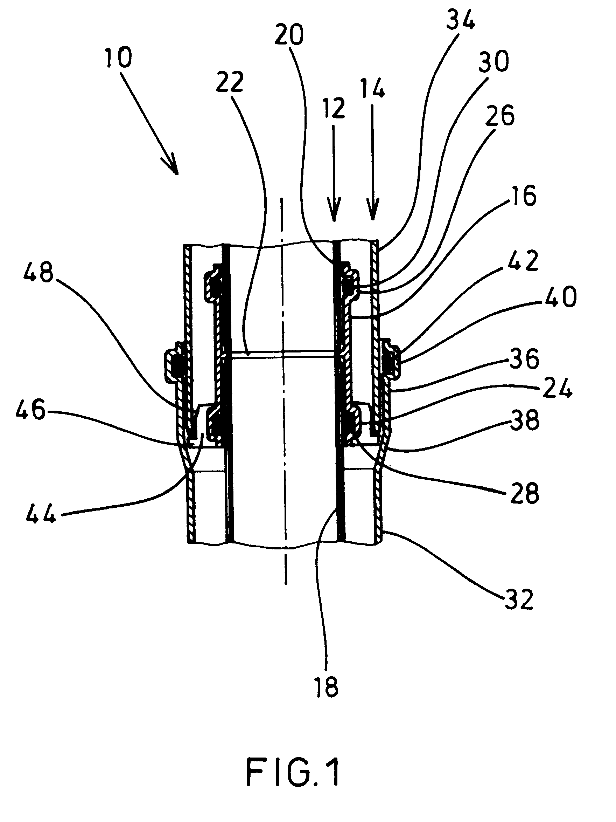

In Fig. 1 ist ein doppelwandiges Rohrleitungssystem 10 mit einem Innenrohrsystem 12 aus PEI und einem hierzu konzentrisch angeordneten Außenrohrsystem 14 aus PVC-U dargestellt.

Das Innenrohrsystem 12 ist aus mit einem Rohrverbinder 16 von 102 mm Länge und 75 mm Innendurchmesser verbundenen geraden Innenrohren 18, 20 mit rundem Querschnitt und einem Nenndurchmesser von 70 mm zusammengefügt, von denen in Fig. 1 ein erstes Innenrohr 18 und ein zweites Innenrohr 20 dargestellt ist.

Der Rohrverbinder 16 ist im Bereich beider Endabschnitte muffenartig mit einem dem Außendurchmesser der Innenrohre 18, 20 entsprechenden Innendurchmesser ausgeführt. An der Innenwandung des Rohrverbinders 16 ist in Längsmitte ein kreisringförmiger 1,5 mm langer und 2,5 mm nach innen ragender Vorsprung 22 angeordnet, auf dem das zweite Innenrohr 20 abgestützt ist.

Nahe den Enden weist der Rohrverbinder 16 je eine 9 mm lange und 4 mm tiefe umlaufende erste Sicke 24 und eine zweite Sicke 26 auf, in die je ein Dichtungsring 28 bzw. 30 eingelegt ist.

Das Außenrohrsystem 14 ist aus Außenrohren 32, 34 mit rundem Querschnitt und 100 mm Nenndurchmesser nach DIN 19534 zusammengefügt, von denen in Fig. 1 unten ein erstes Außenrohr 32 und oben ein Einsteckende eines zweiten Außenrohrs 34 dargestellt ist. Der in Fig. 1 dargestellte Endbereich 36 des ersten Außenrohrs 32 ist anschließend an einen konisch ausgeführten schulterförmigen Abschnitt 38 muffenartig erweitert und nimmt das zweite Außenrohr 34 auf. Nahe dem freien Ende des Endbereichs 36 ist eine umlaufende Dichtungssicke 40 vorgesehen, in die ein Dichtring 42 eingelegt ist.

Auf der Außenseite der ersten Sicke 24 des Rohrverbinders 16 sind in gleichen Abständen in 90°-Teilung über den Umfang verteilt vier einander gleiche in radialer Richtung zur Innenwand der Außenrohre 32, 34 weisende Stützelemente 44 angeformt. Die Länge eines Stützelements 44 in axialer Richtung beträgt 22 mm und ist etwa gleich der doppelten Breite der erste Sicke 24. Die Dicke eines Stützelements 44 beträgt 2 mm und ist gleich der Wanddicke des Rohrverbinders 16.

In radialer Richtung ist die Breite eines Stützelements 44 in einem endnahen Abschnitt 46 gleich der Differenz zwischen dem Außenradius des Rohrverbinders 16 und dem Innenradius des Endbereichs 36 des ersten Außenrohrs 32. Im übrigen ist die Breite eines Stützelements 44 gleich der Differenz zwischen dem Außenradius des Rohrverbinders 16 und dem Innenradius des zweiten Außenrohrs 34. Der endnahe Abschnitt 46 bildet eine Stufe, auf der das zweite Außenrohr 34 aufsitzt. Der endnahe Abschnitt 46 ist zu seinem freien Ende hin schräg eingezogen und liegt an der Innenwand des schulterförmigen Abschnitts 38 des ersten Außenrohres 32 an, so daß er auf diesem abgestützt ist.

Zu seinem anderen Ende hin ist das Stützelement schräg eingezogen und bildet somit eine Anschlupffase 48, die das Einsetzen des zweiten Außenrohres 34 erleichtert.

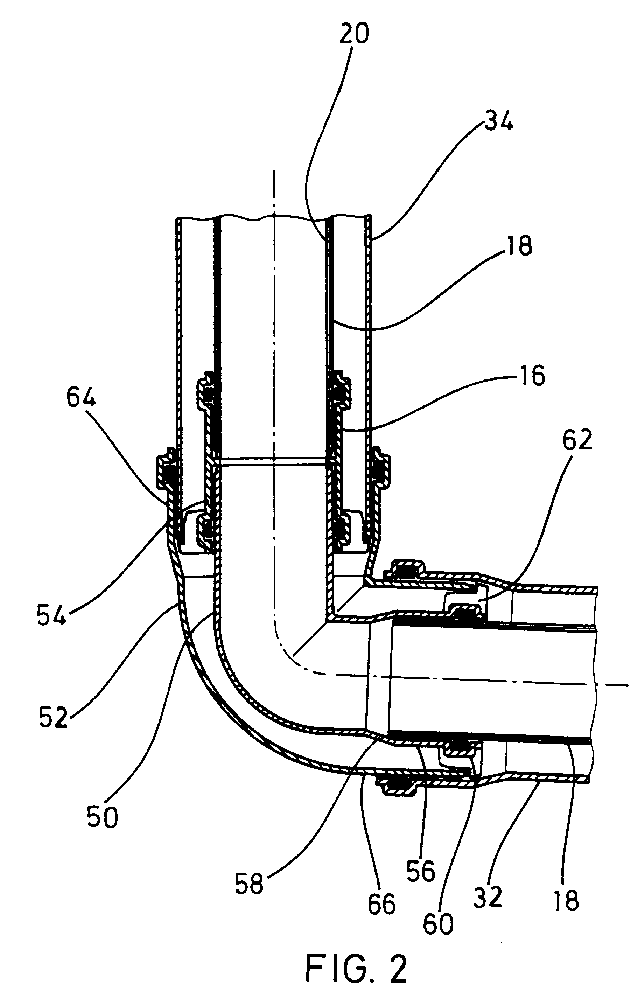

In Fig. 2 ist ein doppelwandiger 87°-Rohrbogen mit einem Innenrohrbogen 50 und einem Außenrohrbogen 52 dargestellt. Der Innenrohrbogen 50 weist einen in der Figur nach oben gerichteten vertikalen Endabschnitt 54 und einen waagrecht dargestellten abgewinkelten Endabschnitt 56 auf.

Der vertikale Endabschnitt 54 des Innenrohrbogens 50 entspricht einem Innenrohr. Auf den vertikalen Endabschnitt 54 ist ein Rohrverbinder 16 aufgesetzt und in diesen ist ein zweites Innenrohr 20 eingesetzt. Der abgewinkelte Endabschnitt 56 des Innenrohrbogens 50 ist anschließend an eine konische Erweiterung 58 muffenartig wie ein Rohrverbinder 16 mit einem dem Außendurchmesser eines Innenrohrs 18 entsprechenden Innendurchmesser von 75 mm ausgeführt.

Nahe dem freien Ende des abgewinkelten Endabschnitts 56 befindet sich eine der ersten Sicke 24 eines Rohrverbinders 16 entsprechende Innerohrbogensicke 60. An dieser sind in gleichen Abständen in 90°-Teilung über den Umfang verteilt vier einander gleiche in radialer Richtung verlaufende den Stützelementen 44 entsprechende Innenrohrbogenstützelemente 62 angeformt.

Der senkrechte Endabschnitt 64 des Außenrohrbogens 52 ist wie der vorstehend beschriebene Endbereich 36 eines ersten Außenrohrs 32 muffenartig ausgebildet. In den senkrechten Endabschnitt 64 ist ein zweites Außenrohr 34 mit seinem Einsteckende eingesetzt. Am waagrecht abgewinkelten Ende 66 ist der Außenrohrbogen 52 entsprechend einem zweiten Außenrohr 34 als Einsteckende ausgebildet. Das waagrecht abgewinkelte Ende 66 ist in ein hier nahezu waagrecht dargestelltes erstes Außenrohr 32 eingesteckt.

## Patentansprüche

1. Doppelwandiges Rohrleitungssystem (10), insbesondere für einen Luft-Abgas-Schornstein, mit einem
Innenrohrsystem (12), das in einem Außenrohrsystem (14) mittels Abstandshaltern konzentrisch angeordnet ist, wobei das Innenrohrsystem (12) längsverschiebbar ineinander eingesteckte Innenrohrteile aufweist und das Außenrohrsystem (14) einzelne Außenrohre (32) aufweist mit einem schulterförmigen Abschnitt (38) mit einer schräg oder quer zur Achse des Rohrleitungssystems (10) verlaufenden Fläche,
**dadurch gekennzeichnet,**
daß das Innenrohrsystem (12) einzelne in Rohrverbinder (16) eingesteckte erste Innenrohre (18) und zweite Innenrohre (20) aufweist,
daß die Abstandshalter als die Rohrverbinder (16) auf den schulterförmigen Abschnitten (38) in axialer Richtung abstützende Stützelemente (44) ausgebildet sind,
daß jeweils das von oben in einen Rohrverbinder (16) eingesteckte zweite Innenrohr (20) auf diesem Rohrverbinder (16) abgestützt ist
und daß die Länge eines von unten in einen Rohrverbinder (16) eingesteckten ersten Innenrohrs (18) um den Betrag der zu erwartenden größtmöglichen Längendehnung vermindert ist, so daß jedes Innenrohr jeweils einzeln abgestützt ist.

2. Doppelwandiges Rohrleitungssystem nach Anspruch 1,
**dadurch gekennzeichnet**,
daß die Stützelemente (44, 62) im Bereich einer Verbindung von zwei Außenrohren (32, 34; 52, 34 bzw. 32, 52) des Außenrohrsystems (14) angeordnet sind.

3. Doppelwandiges Rohrleitungssystem nach Anspruch 1 oder 2,
**dadurch gekennzeichnet**,
daß die Stützelemente (44, 62) als über den Umfang verteilte Stege ausgebildet sind.

4. Doppelwandiges Rohrleitungssystem nach einem der Ansprüche 1 bis 3,
**dadurch gekennzeichnet**,
daß die Stützelemente (44, 62) miteinander verbunden sind und außen auf dem schulterförmigen Abschnitt (38) eines Außenrohres (32) aufliegen und daß an einem Innenrohr schräg oder quer zur Achse verlaufende Flächen angeordnet sind, auf denen das Innenrohr auf den Stützelementen (44, 62) aufliegt.

5. Doppelwandiges Rohrleitungssystem nach einem der Ansprüche 1 bis 3,
**dadurch gekennzeichnet**,
daß die Stützelemente (44) einstückig mit einem Rohrverbinder (16) ausgeführt sind.

6. Doppelwandiges Rohrleitungssystem nach Anspruch 5,
**dadurch gekennzeichnet,**
daß der Rohrverbinder (16) im Bereich beider Endabschnitte muffenartig ausgebildet ist und an seiner Innenwandung einen Vorsprung (22) aufweist.

7. Doppelwandiges Rohrleitungssystem nach einem der Ansprüche 1 bis 3,
**dadurch gekennzeichnet**,
daß die Stützelemente (44, 62) an einem Endabschnitt eines Rohrverbinders (16) bzw. eines Innenrohrbogens (50) angeordnet sind, in den ein anderes Innenrohr (18, 20) einsteckbar ist.

8. Doppelwandiges Rohrleitungssystem nach Anspruch 6 oder 7,
**dadurch gekennzeichnet**,
daß nahe dem freien Ende des Endabschnitts eines Rohrverbinders (16) bzw. eines Innenrohrbogens (50) eine umlaufende Sicke (24, 26, 60) angebracht ist, in die ein Dichtungsring (28, 30) eingelegt ist.

9. Doppelwandiges Rohrleitungssystem nach Anspruch 8,
**dadurch gekennzeichnet,**
daß die Stützelemente (44, 62) im Bereich der Sicke (24, 26, 60) angeordnet sind.

10. Doppelwandiges Rohrleitungssystem nach einem der Ansprüche 1 bis 9,
**dadurch gekennzeichnet**,
daß das Außenrohrsystem (14) aus Außenrohren (32, 34, 52) zusammengesetzt ist, die an einem Ende anschließend an einen schulterförmigen Abschnitt (38), an dem die Stützelemente (44, 62) anliegen, muffenartig erweitert sind.

11. Doppelwandiges Rohrleitungssystem nach Anspruch 10,
**dadurch gekennzeichnet**,
daß die Stützelemente mit einem am schulterförmigen Abschnitt (38) anliegenden Ring verbunden sind.

12. Doppelwandiges Rohrleitungssystem nach einem der Ansprüche 1 bis 3,
**dadurch gekennzeichnet**,
daß die Stützelemente nach innen weisend einstückig mit einem Außenrohr ausgeführt sind und daß an einem auf den Stützelementen aufliegenden Innenrohrteil schräg oder quer zur Achse verlaufende Flächen angeordnet sind.

## Claims

1. Double-walled piping system (10) especially for a chimney for exhaust air and gas, with an inner piping system (12) which is concentrically arranged in an outer piping system (14) by means of distance spacers, the inner piping system (12) showing longitudinally movable inner pipe parts inserted into each other and the outer piping system (14) showing separate outer pipes (32) with a shoulder-like portion (38) with surfaces extending obliquely or transversely to the axis of the piping system (10),
**characterized in** that
the inner piping system (12) shows separate first inner pipes (18) inserted in pipe connectors and second inner pipes (20),
that the distance spacers are shaped as supporting elements sustaining the pipe connectors (16) in the axial direction on the shoulder-like portions (38),
that respectively the second inner pipe (20) inserted from the top into a pipe connector (16) is supported on this pipe connector and that the length of a first inner pipe (18) inserted in a pipe connector (16) is respectively reduced by the amount of the highest expectable longitudinal extension so that each inner pipe is respectively separately supported.

2. Double-walled piping system according to claim 1,
**characterized in** that
the supporting elements (44, 62) are arranged in the area of a connection of two outer pipes (32, 34; 52, 34 respectively 32, 52) of the outer piping system (14).

3. Double-walled piping system according to claim 1 or 2,
**characterized in** that
the supporting elements (44, 62) have the shape of webs spread over the circumference.

4. Double-walled piping system according to one of the claims 1 to 3,
**characterized in** that
the supporting elements (44, 62) are connected with each other and rest outside on the shoulder-like portion (38) of an outer pipe (32) and that surfaces extending obliquely or transversely to the axis are arranged on an inner pipe, on which the inner pipe rests on the supporting elements (44, 62).

5. Double-walled piping system according to one of claims 1 to 3,
**characterized in** that
the supporting elements (44) are carried out in one piece with a pipe connector (16).

6. Double-walled piping system according to claim 5,
**characterized in** that
the pipe connector (16) is muff-like shaped in the area of both end portions and shows a jut (22) on its inner wall.

7. Double-walled piping system according to one of claims 1 to 3,
**characterized in** that
the suporting elements (44, 62) are arranged at an end portion of a pipe connector (16) i.e. of an inner pipe bend (50) into which another inner pipe (18, 20) can be inserted.

8. Double-walled piping system according to claim 6 or 7,
**characterized in** that
near the free end of the end portion of a pipe connector (16) i.e. of an inner pipe bend (50) a rotating bead (24, 26, 60) is fixed in which a sealing ring (28, 30) is laid in.

9. Double-walled piping system according to claim 8,
**characterized in** that
the supporting elements (44, 62) are arranged in the area of the bead (24, 26, 60).

10. Double-walled piping system according to one of the claim 1 to 9,
**characterized in** that
the outer piping system (14) consists of outer pipes (32, 34, 52) which are muff-like widened at one end connecting with a shoulder-like portion (38) to which the supporting elements (44, 62) are adjacent.

11. Double-walled piping system according to claim 10,
**characterized in** that
the supporting elements are connected with a ring adjacent to a shoulder-like portion (38).

12. Double-walled piping system according to one of claims 1 to 3,
**characterized in** that
the supporting elements are turned to the inside and carried out in one piece with an outer pipe and that, on an inner pipe part resting on the supporting elements, surfaces are arranged which extend obliquely or transversely to the axis.

## Revendications

1. Système de tuyauterie à double paroi (10), en particulier pour une cheminée d'aération et d'échappement de gaz, avec un système de tuyaux intérieurs (12) étant disposé de façon concentrique à l'aide d'écarteurs dans un système de tuyaux extérieurs (14), le système de tuyaux intérieurs (12) présentant des parties de tuyau intérieur emboîtées les unes dans les autres et le système de tuyaux extérieurs (14) présentant des tuyaux extérieurs séparés (32) avec une portion faisant épaulement (38) ayant des surfaces s'étendant en biais ou en travers par rapport à l'axe du système de tuyauterie (10),
**caractérisé en ce que**
le système de tuyaux intérieurs (12) présente des premiers tuyaux intérieurs (18) et des seconds tuyaux intérieurs (20),
en ce que les écarteurs ont la forme d'éléments-supports (44) soutenant les raccords de tuyaux (16) sur les portions faisant épaulement (38) dans le sens de l'axe,
en ce que respectivement le second tuyau intérieur (20) emboîté du haut dans un raccord de tuyau est appuyé sur ce raccord de tuyau (16) et en ce que la longueur d'un premier tuyau intérieur (18) emboîté du bas dans un raccord de tuyau (16) est diminué de l'allongement le plus grand possible auquel on puisse s'attendre si bien que chaque tuyau intérieur est soutenu respectivement séparément.

2. Système de tuyauterie à double paroi selon la revendication 1,
**caractérisé en ce que**
les éléments-supports (44, 62) sont disposés dans la zone de raccord de deux tuyaux extérieurs (32, 34; 52, 34 et resp. 32, 52) du système de tuyaux extérieurs (14).

3. Système de tuyauterie à double paroi selon la revendication 1 ou 2,
**caractérisé en ce que**
les éléments-supports (44, 62) ont la forme d'entretoises réparties sur la circonférence.

4. Système de tuyauterie à double paroi selon l'une des revendications 1 à 3,
**caractérisé en ce que**
les éléments-supports (44, 62) sont reliés les uns aux autres et reposent à l'extérieur sur une portion (38) faisant épaulement d'un tuyau extérieur (32) et que des surfaces s'étendant en biais ou en travers par rapport à l'axe sont disposées sur un tuyau intérieur, sur lesquelles le tuyau intérieur repose sur les éléments-supports (44, 62).

5. Système de tuyauterie à double paroi selon l'une des revendications 1 à 3,
**caractérisé en ce que**
les éléments-supports (44) sont réalisés d'une pièce avec un raccord de tuyau (16).

6. Système de tuyauterie à double paroi selon la revendication 5,
**caractérisé en ce que**
le raccord de tuyau (16) a la forme d'un mouffon dans la zone des portions finales et présente une avancée (22) sur sa paroi interne.

7. Système de tuyauterie à double paroi selon l'une des revendications 1 à 3,
**caractérisé e n ce que**
les éléments-supports (44, 62) sont disposés à la portion finale d'un raccord de tuyau (16) et donc d'une courbure de tuyau intérieur (50) dans lequel un autre tuyau intérieur (18, 20) peut s'emboîter.

8. Système de tuyauterie à double paroi selon la revendication 6 ou 7,
**caractérisé en ce que**
près de l'extrémité libre de la portion finale d'un raccord de tuyau (16) et donc d'une courbure de tuyau intérieur (50) est disposée une moulure (24, 26, 60) dans laquelle un anneau d'étanchéité (28, 30) est déposé.

9. Système de tuyauterie à double paroi selon la revendication 8,
**caractérisé en ce que**
les éléments-supports (44, 62) sont disposés dans la zone de la moulure (24, 25, 60).

10. Système de tuyauterie à double paroi selon l'une des revendications 1 à 9,
**caractérisé en ce que**
le système de tuyaux extérieurs (14) est constitué de tuyaux extérieurs (32, 34, 52) étant élargis en forme de manchon à une extrémité adjacente à une portion (38) formant épaulement sur laquelle les éléments-supports portent (44, 62).

11. Système de tuyauterie à double paroi selon la revendication 10,
**caractérisé en ce que**
les éléments-supports sont reliés par un anneau portant sur la portion formant épaulement (38).

12. Système de tuyauterie à double paroi selon l'une des revendications 1 à 3,
**caractérisé en ce que**
les éléments-supports sont réalisés en une pièce et tournés vers l'intérieur et que des surfaces s'étendant en biais ou en travers par rapport à l'axe sont disposées sur une partie de tuyau intérieur reposant sur les éléments-supports.
